# EUROPEAN PATENT SPECIFICATION

(11) **EP 4 493 426 B1**
(45) Date of publication and mention of the grant of the patent: **16.09.2026**
(21) Application number: 23723639.3
(22) Date of filing: 14.03.2023
(51) Int. Cl.: B60K 1/04

(54) **MODULAR RACK FOR A PUBLIC TRANSPORT VEHICLE**
MODULARER RAHMEN FÜR EIN FAHRZEUG DES ÖFFENTLICHEN PERSONENVERKEHRS
COMPARTIMENT MODULAIRE POUR UN VÉHICULE DE TRANSPORT EN COMMUN

(30) Priority: 15.03.2022 IT 202200005030
(43) Date of publication of application: 22.01.2025
(73) Proprietor: IVECO FRANCE S.A.S., 69200 Vénissieux (FR)
(72) Inventor: NIGNOL, Christophe, 69200 VENISSIEUX (FR)
(74) Representative: Studio Torta S.p.A.
(86) International application number: PCT/IB2023/000153
(87) International publication number: WO 2023/175396

(56) References cited:
- EP-A1- 3 377 347
- EP-B1- 3 377 347
- KR-A- 20120 060 073
- SE-A1- 1 850 297

## Description

### TECHNICAL FIELD

The present invention concerns a modular rack for a vehicle, in particular a modular rack for a public transport vehicle.

The present invention finds its preferred, although not exclusive, application in storing electrical batteries in an electrical vehicle. Reference will be made to this application by way of example below.

### BACKGROUND OF THE INVENTION

Public transport vehicles such as buses are more and more electrified in order to reduce their pollution emission. Electrified vehicles need electrical batteries to store electrical energy to be used by the vehicle.

It is common to provide such electrical batteries on the roof of the vehicle, in a dedicated space separated by the environment by a cover. Indeed, such allocation of the electrical batteries allows a quick intervention in maintenance and rescue operation, allows an easy conditioning and avoid undesired contact in case of collision with ground or vehicles.

However, electrical batteries varies according to the electrical power needed by the vehicle and its utilities. Accordingly, fixation means for fixing the electrical batteries to the roof and the cover covering these latter may be designed again and modified for each variation of battery dimension.

Indeed, a variation of position of the batteries on the roof of the vehicle must be attentively designed in order to not vary excessively the gravity center that deeply influences the maneuverability of the vehicle and the maximum number of passengers that can be transported.

It is clear therefore that the above operation are time consuming, thereby increasing design costs. Furthermore, the above limits does not allow on an already operative vehicle to easily change the electrical batteries with greater ones.

Therefore, the need is felt to allow the fixation of electrical batteries on a roof of a public transport vehicle in a versatile way in order to allow the fixation of different dimension batteries.

Existing systems are disclosed in SE1850297 A1, EP3377347 A1 or KR20120060073 A.

An aim of the present invention is to satisfy the above mentioned needs in a cost-effective and optimized manner.

### SUMMARY OF THE INVENTION

The aforementioned aim is reached by a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a public transport vehicle according to the invention;
- Figures 2 and 3 are perspective views, with parts removed for sake of clarity, of the public transport vehicle of figure 1;
- Figure 4 is a perspective exploded view of a portion of the vehicle of figure; and
- Figure 5 is a perspective view of the portion of figure 4.

### DETAILED DESCRIPTION OF THE INVENTION

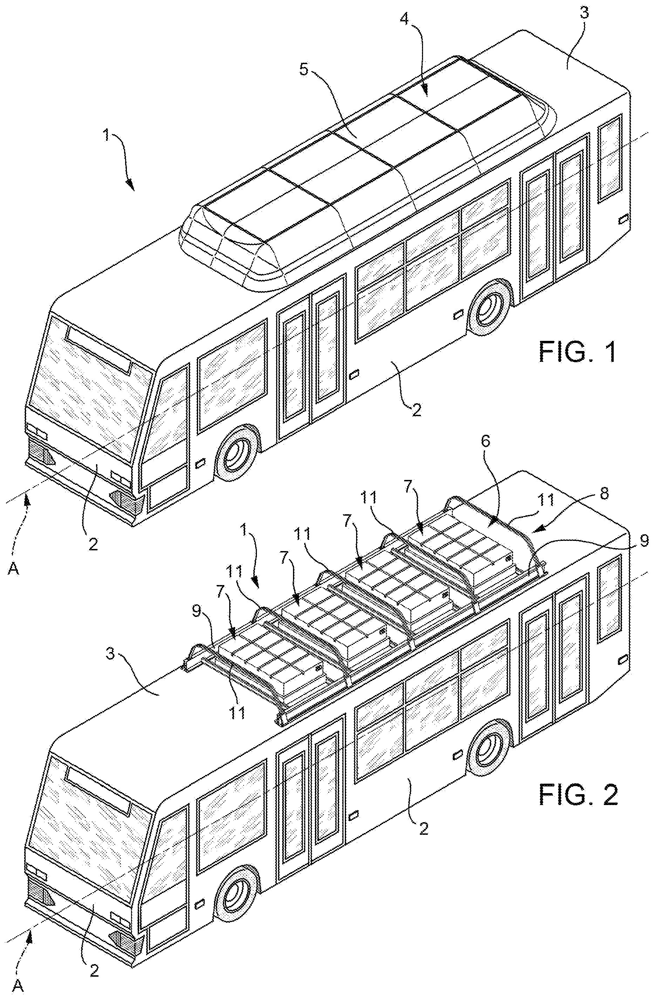

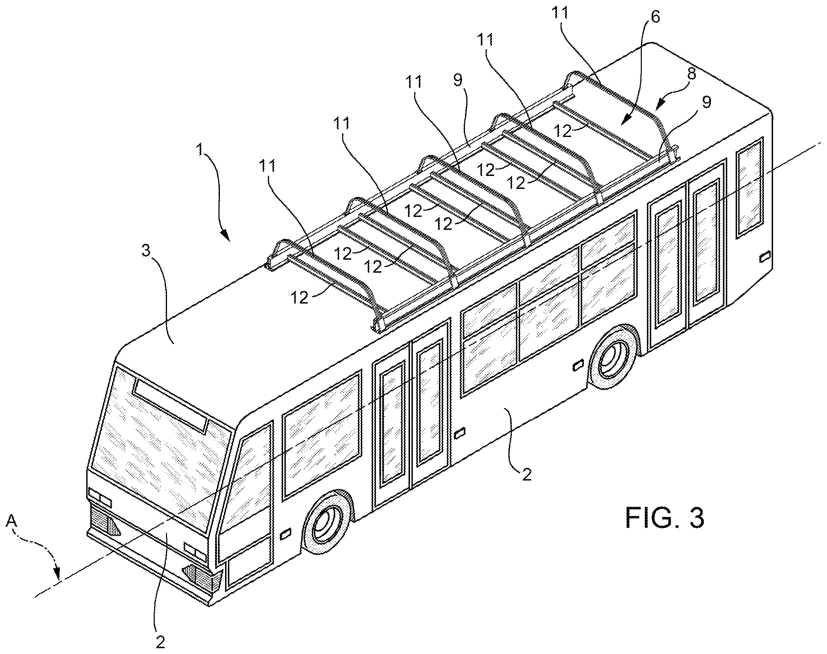

In figures 1 to 3 it is shown an exemplarily public transport vehicle 1 comprising a plurality of lateral walls 2, a floor (not shown) and a roof 3 configured to delimit a space (not visible) configured to house passengers, as known.

The vehicle 1 extends along a longitudinal axis A and the roof 3 is provided with a housing 4 for storing a plurality of operative modules, such as electrical battery modules 7 of the vehicle.

The housing 4 comprises a cover 5 configured to delimit a space 6 suitable for housing the electrical battery modules 7. Clearly, cover 5 is carried by roof 3 in a manner to separate the space 6 with respect to environment, i.e. to avoid that water or dirty elements may penetrate therein.

The cover 5 is carried by a support structure 8 that is fixable to the roof 3 and extends at least on part of the longitudinal extension of this latter, i.e. on longitudinal axis A.

The support structure 8 essentially comprises a pair of side member 9 extending parallel to longitudinal axis A and placed in correspondence of a longitudinal corner of the vehicle 1, i.e. in correspondence of the junction between rood and one of lateral walls 2. Moreover, the side members 9 are preferably equally spaced with respect to longitudinal axis A.

The support structure 8 furthermore comprises a plurality of rafter elements 11 extending transversally with respect to longitudinal axis A and spaced one with respect to the over along longitudinal axis A. The rafter elements 11 are connected to the side members 9 and carry the cover 5.

In particular, the rafter elements 11 extend equally spaced one with respect to the other along longitudinal axis A and above the side members 9. Each rafter element 11 is connected to its transversal extremities to a respective side member 9, as detailed in the following.

The support structure 8 furthermore comprises a plurality of support beams 12 extending transversally with respect to longitudinal axis A. The support beams 12 are connected to side members 9 and carry the operative modules 7.

In particular, support beams 12 extends within the vertical extension of the side members 9. Each support beam 12 is connected to its transversal extremities to a respective side member 9, as detailed in the following.

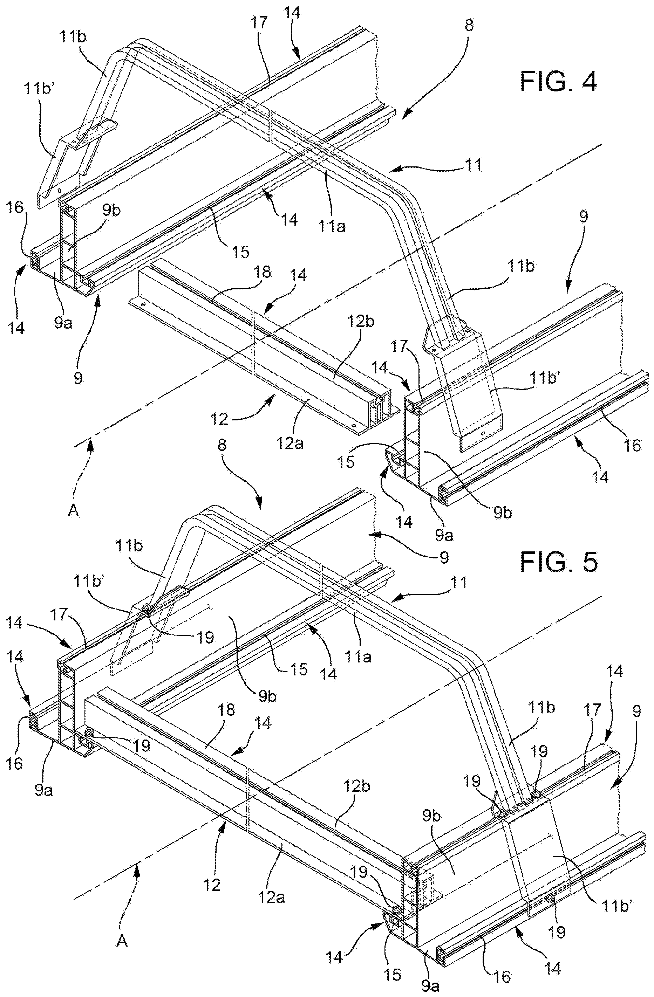

Making reference to figures 4 and 5, each side member 9 comprise a fixing portion 9a configured to be fixed to the roof 3 and a cantilevered portion 9b extending along vertical direction, preferably vertically, from fixing portion 9a.

The fixing portion 9a and the cantilevered portion 9b each define at least a guide means 14 configured to allow the fixation of rafter elements 11 and/or support beams 12. According to the exemplarily shown embodiment, the guide means 14 comprise rails realized integrally within side members 9 and extending along longitudinal axis A. Therefore, preferably, the side members 9 are profiled elements.

In detail, the fixing portion 9a defines a first rail 15 configured to allow fixation of support beams 12 and a second rail 16 configured to allow the support of rafter elements 11 while the cantilevered portion 9b defines a third rail 17 configured to allow the support of rafter elements 11.

In further detail, the first rail 15 extends on a portion of the fixing portion 9a parallel and adjacent to roof 3 and housed in space 6 and it is opened on the opposite side with respect to the roof 3. Conversely, the second rail extends on a portion of the fixing portion 9a parallel and adjacent to roof 3 and housed outside space 6 and it is opened on transversal direction opposite to cantilevered portion 9b. The third rail 19 is realized on a vertical extremity of the cantilevered portion and is opened on a side opposite to the fixing portion 9a, i.e. in the same way of the first rail 15.

Each support beam 12 comprise a central portion 12b and a pair of lateral flanges 12a extending cantilevered from a lower edge of the central portion 12b. The support beam 12 is dimensioned so as to overlap transversally with the first rail 15 and the lateral flanges 12a define an opening suitable for housing fixing means 19, e.g. threaded means, configured to fix the support beam 12 to the side members 9.

The central portion 12b furthermore defines guide means 14, in particular a fourth rail 18, extending along the entire extension of support beam 12 and configured to allow the fixation of a battery module (not shown). In particular the fourth rail 18 is opened on the opposite side with respect to the roof 3.

Referring back to rafter elements 11, each comprises a central portion 11a and a pair of transversal portions 11b. In detail, the transversal portions 11b are configured to be coupled to a respective side member 9 and are inclined with respect to the plane defined by roof 3. The central portion 11a is preferably parallel to the plane defined by the roof 3 and is vertically distanced with respect to this latter.

In particular, the transversal portions 11b each comprises a terminal portion 11b' defining at least a coupling portion configured to allow the fixation of the transversal portion 11b to the at least one guide mean 14. In the disclosed embodiment, such the terminal portion 11b comprises a pair of flanges direction so as to cooperate with, respectively, second and third rails and configured to define an opening suitable for housing fixing means 19, e.g. threaded means, configured to fix the rafter element 11 to the side members 9.

It is noticed that support elements 12 are preferably configured as profiled elements. Similarly, at least the central portion 11a of the rafter elements 11 and part of the transversal elements 11b are realized as a profiled elements.

Preferably, the support structure elements, i.e. side members 9, rafter elements 11 and support beams 12 are realized in metal, such as aluminum.

The operation of the embodiment of the invention as described above is the following.

As shown in figure 4, the rafter elements 11 and the support elements 12 can be assembled on the side elements 9 in order to regulate their positioning thanks to guide means 14. Indeed, both the rafter elements 11 and the support elements 12 can slide in the rails 15, 16, 17 and can be fixed via fixation means 19 on the side members. If there is need to modify their positioning or substitute a rafter element with a higher one, it is sufficient to act on fixation means 19 to allow free movement of the element to be substituted and fix the new one. Similarly, if there is need to increase or decrease the distance between side members, they could be removed and fixed again in the new position. The cover 5 may be re-design or comprising different size panels and fixed again to the new provided shape of the support structure 8.

In view of the foregoing, the advantages of vehicle according to the invention are apparent.

Thanks to the proposed support structure, the positioning of rafter elements and support beams may be varied, thereby allows regulation of the position of operative module.

Accordingly, it is possible to made a fine tuning of the gravity center of the vehicle in order to optimize its maneuverability and to increase the number of transportable passengers.

Furthermore, the proposed support structure provides a versatile, scalable and modular way to support different electrical batteries on the same vehicle and/or same electrical batteries on different typologies of vehicles.

Similarly to the above, the provide support structure can be used in different typology of vehicle, vehicle roof and for supporting different operative module carried on the roof of the vehicle.

It is clear that modifications can be made to the described vehicle which do not extend beyond the scope of protection defined by the claims.

For example, the disposition, number, shape and material of the support structure elements may vary according to the need of the vehicle.

Indeed, different disposition, shape and numbers of support structure elements may be chosen according to the typology of electrical battery/operative modules.

## Claims

1. Vehicle (1) for public transport comprising a plurality of walls (2), a floor and a roof (3) delimiting a space into which passengers are housed,
said vehicle (1) extending along a longitudinal axis (A) and comprising a housing (4) carried by said roof (3) and configured to delimit a space (6) into which at least an operative module (7) can be housed, said housing (4) comprising a support structure (8) fixable to said roof (3) and a cover (5) carried by said support structure (8) and configured to delimit said space (6),
said support structure (8) comprising:
- a pair of side members (9) configured to be fixed to the roof (3) and extending along said longitudinal axis (A) direction;
- a plurality of rafter elements (11) extending transversally along said longitudinal axis (A), each rafter element (11) being configured to be fixed to said side members (9) and to carry said cover (5); and
- a plurality of support beams (12) extending transversally along said longitudinal axis (A), each support beam (12) being configured to be fixed to said side members (9) and to carry said operative module (7),
wherein the side members (9) comprise guide means (14) configured to allow regulation of position of said rafter elements (11) and said support beams (12) with respect to said side members (9) along said longitudinal axis (A).

2. Vehicle according to claim 1, wherein said guide means (14) comprise rails (15, 16, 17).

3. Vehicle according to claim 2, wherein said rails (14, 15, 16) allow the fixation of the respective element via threaded means (19).

4. Vehicle according to any of the preceding claims, wherein each side member (9) comprise a fixation portion (9a) and a cantilevered portion (9b) extending from said fixation portion (9a), said fixation portion (9a) and said cantilevered portion (9a) defining at least one guide means (14).

5. Vehicle according to claim 4, wherein said fixation portion (9a) defines one guide means (14) in the space comprised between said side members (9) and configured to cooperate with said support beam (12) and one guide means (14) in the space outside said side members (9) and configured to cooperate with said rafter element (11).

6. Vehicle according to claim 4 or 5, wherein said cantilevered portion (9b) defines one guide means (14) in configured to cooperate with said rafter element (11).

7. Vehicle according to any of the preceding claims, wherein said support beam (12) defines guide means (14) configured to allow the fixation of said operative module (7) thereto.

8. Vehicle according to any of the preceding claims, wherein said rafter element (11) comprises a pair of transversal portions (11b) and a central portion (11a), said transversal portions (11b) each comprises a terminal portion (11b') configured to cooperate with guide means (14) of a respective side member (9), said central portion (11a) being parallel to said roof (3) and positioned upper said side members (9).

9. Vehicle according to claim 8, wherein said transversal portions (11b) are inclined with respect to said roof (3).

10. Vehicle according to any of the preceding claims, wherein said side members (9) are profiled elements.

11. Vehicle according to any of the preceding claims, wherein support beams (12) are profiled elements.

12. Vehicle according to any of the preceding claims, wherein at least part of said rafter elements (11) is a profiled element.

13. Vehicle according to any of the preceding claims wherein said side members (9), said support beams (12) and said rafter elements (11) are realized in metallic material.

## Patentansprüche

1. Fahrzeug (1) für den öffentlichen Verkehr, umfassend eine Vielzahl von Wänden (2), einen Boden und ein Dach (3), die einen Raum begrenzen, in dem Passagiere untergebracht sind,
wobei sich das Fahrzeug (1) entlang einer Längsachse (A) erstreckt und ein Gehäuse (4) umfasst, das von dem Dach (3) getragen wird und konfiguriert ist, um einen Raum (6) zu begrenzen, in dem mindestens ein Betriebsmodul (7) untergebracht werden kann, wobei das Gehäuse (4) eine Stützstruktur (8), die an dem Dach (3) befestigt werden kann, und eine Abdeckung (5) umfasst, die von der Stützstruktur (8) getragen wird und konfiguriert ist, um den Raum (6) zu begrenzen,
wobei die Stützstruktur (8) Folgendes umfasst:
- ein Paar von Seitenelementen (9), die konfiguriert sind, um an dem Dach (3) befestigt zu werden, und sich entlang der Richtung der Längsachse (A) erstrecken;
- eine Vielzahl von Sparrenelementen (11), die sich quer entlang der Längsachse (A) erstrecken, wobei jedes Sparrenelement (11) konfiguriert ist, um an den Seitenelementen (9) befestigt zu werden und die Abdeckung (5) zu tragen; und
- eine Vielzahl von Stützbalken (12), die sich quer entlang der Längsachse (A) erstrecken, wobei jeder Stützbalken (12) konfiguriert ist, um an den Seitenelementen (9) befestigt zu werden und das Betriebsmodul (7) zu tragen,
wobei die Seitenelemente (9) Führungsmittel (14) umfassen, die konfiguriert sind, um eine Regulierung der Position der Sparrenelemente (11) und der Stützbalken (12) in Bezug auf die Seitenelemente (9) entlang der Längsachse (A) zu ermöglichen.

2. Fahrzeug nach Anspruch 1, wobei die Führungsmittel (14) Schienen (15, 16, 17) umfassen.

3. Fahrzeug nach Anspruch 2, wobei die Schienen (14, 15, 16) die Befestigung des jeweiligen Elements über Gewindemittel (19) ermöglichen.

4. Fahrzeug nach einem der vorhergehenden Ansprüche, wobei jedes Seitenelement (9) einen Befestigungsabschnitt (9a) und einen freitragenden Abschnitt (9b) umfasst, der sich von dem Befestigungsabschnitt (9a) erstreckt, wobei der Befestigungsabschnitt (9a) und der freitragende Abschnitt (9a) mindestens ein Führungsmittel (14) definieren.

5. Fahrzeug nach Anspruch 4, wobei der Befestigungsabschnitt (9a) ein Führungsmittel (14) in dem Raum, der zwischen den Seitenelementen (9) enthalten ist und konfiguriert ist, um mit dem Stützbalken (12) zusammenzuwirken, und ein Führungsmittel (14) in dem Raum außerhalb der Seitenelemente (9) definiert und konfiguriert ist, um mit dem Sparrenelement (11) zusammenzuwirken.

6. Fahrzeug nach Anspruch 4 oder 5, wobei der freitragende Abschnitt (9b) ein Führungsmittel (14) definiert, das konfiguriert ist, um mit dem Sparrenelement (11) zusammenzuwirken.

7. Fahrzeug nach einem der vorhergehenden Ansprüche, wobei der Stützbalken (12) Führungsmittel (14) definiert, die konfiguriert sind, um die Befestigung des Betriebsmoduls (7) daran zu ermöglichen.

8. Fahrzeug nach einem der vorhergehenden Ansprüche, wobei das Sparrenelement (11) ein Paar von Querabschnitten (11b) und einen zentralen Abschnitt (11a) umfasst, wobei die Querabschnitte (11b) jeweils einen Endabschnitt (11b') umfassen, der konfiguriert ist, um mit Führungsmitteln (14) eines jeweiligen Seitenelements (9) zusammenzuwirken, wobei der zentrale Abschnitt (11a) parallel zu dem Dach (3) ist und über den Seitenelementen (9) positioniert ist.

9. Fahrzeug nach Anspruch 8, wobei die Querabschnitte (11b) in Bezug auf das Dach (3) geneigt sind.

10. Fahrzeug nach einem der vorhergehenden Ansprüche, wobei die Seitenelemente (9) Profilelemente sind.

11. Fahrzeug nach einem der vorhergehenden Ansprüche, wobei Stützbalken (12) Profilelemente sind.

12. Fahrzeug nach einem der vorhergehenden Ansprüche, wobei mindestens ein Teil der Sparrenelemente (11) ein Profilelement ist.

13. Fahrzeug nach einem der vorhergehenden Ansprüche, wobei die Seitenelemente (9), die Stützbalken (12) und die Sparrenelemente (11) aus metallischem Material hergestellt sind.

## Revendications

1. Véhicule (1) de transport public comprenant une pluralité de parois (2), un plancher et un toit (3) délimitant un espace dans lequel des passagers sont accueillis,
ledit véhicule (1) s'étendant selon un axe longitudinal (A) et comprenant un boîtier (4) porté par ledit toit (3) et configuré pour délimiter un espace (6) dans lequel au moins un module fonctionnel (7) peut être accueilli, ledit boîtier (4) comprenant une structure de support (8) pouvant être fixée audit toit (3) et un couvercle (5) porté par ladite structure de support (8) et configuré pour délimiter ledit espace (6),
ladite structure de support (8) comprenant :
- une paire d'éléments latéraux (9) configurés pour être fixés au toit (3) et s'étendant selon la direction dudit axe longitudinal (A) ;
- une pluralité d'éléments de chevron (11) s'étendant transversalement selon ledit axe longitudinal (A), chaque élément de chevron (11) étant configuré pour être fixé auxdits éléments latéraux (9) et pour porter ledit couvercle (5), et
- une pluralité de poutres de support (12) s'étendant transversalement selon ledit axe longitudinal (A), chaque poutre de support (12) étant configurée pour être fixée auxdits éléments latéraux (9) et pour porter ledit module fonctionnel (7),
dans lequel les éléments latéraux (9) comprennent des moyens de guidage (14) configurés pour permettre la régulation de position desdits éléments de chevron (11) et desdites poutres de support (12) par rapport auxdits éléments latéraux (9) selon ledit axe longitudinal (A).

2. Véhicule selon la revendication 1, dans lequel lesdits moyens de guidage (14) comprennent des rails (15, 16, 17).

3. Véhicule selon la revendication 2, dans lequel lesdits rails (14, 15, 16) permettent la fixation de l'élément respectif par le biais de moyens filetés (19).

4. Véhicule selon l'une quelconque des revendications précédentes, dans lequel chaque élément latéral (9) comprend une partie de fixation (9a) et une partie en porte-à-faux (9b) s'étendant à partir de ladite partie de fixation (9a), ladite partie de fixation (9a) et ladite partie en porte-à-faux (9a) définissant au moins un moyen de guidage (14).

5. Véhicule selon la revendication 4, dans lequel ladite partie de fixation (9a) définit un moyen de guidage (14) dans l'espace compris entre lesdits éléments latéraux (9) et configuré pour coopérer avec ladite poutre de support (12) et un moyen de guidage (14) dans l'espace à l'extérieur desdits éléments latéraux (9) et configuré pour coopérer avec ledit élément de chevron (11).

6. Véhicule selon la revendication 4 ou 5, dans lequel ladite partie en porte-à-faux (9b) définit un moyen de guidage (14) configuré pour coopérer avec ledit élément de chevron (11).

7. Véhicule selon l'une quelconque des revendications précédentes, dans lequel ladite poutre de support (12) définit des moyens de guidage (14) configurés pour permettre la fixation dudit module opérationnel (7) à celle-ci.

8. Véhicule selon l'une quelconque des revendications précédentes, dans lequel ledit élément de chevron (11) comprend une paire de parties transversales (11b) et une partie centrale (11a), lesdites parties transversales (11b) comprenant chacune une partie terminale (11b') configurée pour coopérer avec des moyens de guidage (14) d'un élément latéral (9) respectif, ladite partie centrale (11a) étant parallèle audit toit (3) et positionnée au-dessus desdits éléments latéraux (9).

9. Véhicule selon la revendication 8, dans lequel lesdites parties transversales (11b) sont inclinées par rapport audit toit (3).

10. Véhicule selon l'une quelconque des revendications précédentes, dans lequel lesdits éléments latéraux (9) sont des éléments profilés.

11. Véhicule selon l'une quelconque des revendications précédentes, dans lequel les poutres de support (12) sont des éléments profilés.

12. Véhicule selon l'une quelconque des revendications précédentes, dans lequel au moins une partie desdits éléments de chevron (11) sont des éléments profilés.

13. Véhicule selon l'une quelconque des revendications précédentes dans lequel lesdits éléments latéraux (9), lesdites poutres de support (12) et lesdits éléments de chevron (11) sont réalisés en matériau métallique.
